# EUROPÄISCHE PATENTSCHRIFT

(11) **EP 3 499 866 B1**
(45) Veröffentlichungstag und Bekanntmachung des Hinweises auf die Patenterteilung: **11.09.2024**
(21) Anmeldenummer: 18020635.1
(22) Anmeldetag: 13.12.2018
(51) Int. Cl.: H04N 1/00, H04N 1/21, H04N 1/32, H04N 23/60, H04N 23/661, H04N 23/90, H04N 5/77

(54) **VERFAHREN ZUR VERNETZUNGSUNABÄNGIGEN SYNCHRONISIERTEN GENERIERUNG EINER BILDERSERIE**
METHOD FOR LINK-INDEPENDENT SYNCHRONISED GENERATION OF A SERIES OF IMAGES
PROCÉDÉ DE GÉNÉRATION SYNCHRONISÉE INDÉPENDANTE DE L'INTERCONNEXION DE RÉSEAUX D'UNE SÉRIE D'IMAGES

(30) Priorität: 15.12.2017 DE 102017011656
(43) Veröffentlichungstag der Anmeldung: 19.06.2019
(73) Patentinhaber: Kren, Volker, 73733 Esslingen am Neckar (DE)
(72) Erfinder:
(74) Vertreter: Kren, Florian

(56) Entgegenhaltungen:
- US-A1- 2010 009 700
- US-A1- 2011 157 389
- US-A1- 2014 362 246
- US-A1- 2017 324 888

## Beschreibung

Die vorliegende Erfindung betrifft ein Verfahren zur Generierung einer Bilderserie bzw. einer Sammlung von Bildern in einem Master-/Slavesystem, sowie eine Gruppe von mobilen Geräten und einen Server eingerichtet als ein solches Master-/Slave-System.

Ähnliche Verfahren sind allgemein aus verschiedenen Anwendung bekannt, bei denen mehrere Aufnahmevorrichtungen koordiniert Bilder aufnehmen. Ziel ist es dabei meist, die Bilder von mehreren unterschiedlichen Aufnahmegeräten zu kombinieren/zu verbinden, um ein zusammenhängendes Bild, 3D-Daten oder andere Informationen über ein bestimmtes interessierendes Motiv zu erhalten.

So zeigt beispielsweise die US 2013/0128052 A1 ein Verfahren zum Erzeugen von Aufnahmen mit mehreren Perspektiven (z.b. zur Erzeugung von 3D-Bildern), bei dem mehrere Kameras synchronisiert werden und anschließend synchronisierte Anweisungen zum Beginn einer Aufnahme an die Kameras geschickt werden.

Ein Verfahren allgemein zum Synchronisieren mehrerer Geräte mit Kameras ist aus der US 2010/0289951 A1 bekannt.

Aus der US 2006/0001744 A1 ist ein Verfahren zur Bildung eines Netzwerks mit mehreren mobilen Geräten mit Kameras bekannt, bei dem die mobilen Geräte synchron Anweisungen zur Bildaufnahme erhalten, um beispielsweise ein lückenloses 360°-Panoramabild zu generieren.

Aus der US 2010/0009700 A1 ein Verfahren bekannt, bei dem mehrere mobile Geräte mit Kameras von einem zentralen Bildverarbeitungssystem Signale zwecks Generierung einer Aufnahme erhalten, entweder direkt durch das Signal ausgelöst oder als Aufforderung an den Nutzer. Diese Signale erfolgen, wenn die regelmäßig von dem mobilen Gerät an das Bildverarbeitungssystem gesendeten Informationen anzeigen, dass das mobile Gerät in Bezug auf ein interessierendes Objekt in einer geeigneten Aufnahmeposition ist. Die gesammelten Bilder werden zur Generierung von Bilderserien über interessierende Objekte und/oder zu deren Vermessung genutzt. Weitere Verfahren zur Generierung einer Sammlung von Bildern sind aus der US 2011/157389 A1 und der US 2017/324888 A1 bekannt.

Aus der US 2014/362246 A1 ist ein Verfahren für eine synchrone Aufnahme in einem Master-/Slave-System bekannt.

Dabei weisen die bekannten Verfahren erhebliche Schwächen auf, wenn mit einer Gruppe von mobilen Geräten mit Kameras gemeinsam eine Bilderserie erzeugt werden soll, die nicht nur ein einzelnes Objekt aus verschiedenen Perspektiven zeigen soll, sondern eine chronologische Sammlung von gleichen oder unterschiedlichen Objekten/Orten, die mit unterschiedlichen Kameras aus der Gruppe photographiert werden, wobei Lücken in der Bilderserie möglichst vermieden werden sollen.

Bedarf für solches besteht aber zum Beispiel, wenn eine Gruppe von Wanderern einzeln bzw. in individuellem Tempo beispielsweise eine bestimmte Route abgehen und eine Bilderserie umfassend Bilder von jeweils markanten Wegpunkten von jedem aus der Gruppe erzeugt werden soll.

Ein anderes Beispiel wäre eine Gruppe von durch Personen mitgeführte Kameras, mit denen eine Bilderserie zur Dokumentation der Bewegung aller beteiligten Personen generiert werden soll.

Ein weiteres Beispiel wäre, wenn von einem Objekt von Interesse aus verschiedenen Blickwinkeln bzw. von verschiedenen Positionen aus über einen längeren Zeitraum eine Bilderserie angefertigt werden soll, beispielsweise um Veränderungen zu dokumentieren.

Ein weiteres Beispiel wäre das Führen eines gemeinsames synchronisierten Fototagebuchs, wenn verschiedene Nutzer über einen längeren Zeitraum/über Tage oder Wochen hinweg beispielsweise zum selben Zeitpunkt Bilder aufnehmen wollen und diese in einem Fototagebuch verbinden wollen.

Bei solchen und ähnlichen Problemstellungen ist dabei einerseits nicht unbedingt kontinuierlich eine Vernetzung möglich, andererseits muss möglichst sichergestellt werden, dass alle gewünschten Aufnahmen auch erfolgen und geeignet zu einer Bilderserie zusammengefügt werden.

Aufgabe der vorliegenden Erfindung ist es vor diesem Hintergrund ein Verfahren anzugeben, mit denen entsprechende Bilderserien unter Überwindung der Nachteile des Standes der Technik ermöglicht sind.

Diese Aufgabe wird gelöst durch ein Verfahren nach Anspruch 1. Vorteilhafte Ausgestaltungen sind Gegenstand der abhängigen Ansprüche.

Die Reihenfolge entspricht dabei im Allgemeinen der alphabetischen Reihenfolge der Schritte.

Allerdings kann insbesondere Schritt c2) auch nach Schritt d1) erfolgen oder c1) nach d2); erforderlich ist lediglich, dass mit Beginn des Bildaufnahmeprozesses jedem Slave-System das oder die Aufnahmekriterien übermittelt wurden und rechtzeitig vor dem voraussichtlichen zeitlichen Ende der Serie auch das Serienendkriterium. Bevorzugt erfolgen Einstellung und Übermittlung jeweils aufeinander nachfolgend bzw. gleichzeitig.

Ferner erfolgt der Schritt e2) bevorzugt immer direkt nach dem Schritt e1); aber Schritt e2) kann auch verzögert erfolgen, beispielsweise wenn das betreffende Slave-System keinen Kontakt zum Master-System hat. Bzw. Schritt e2) kann auch mehrfach versucht werden, z.b. solange bis ein Bestätigungssignal des Master-Systems an das Slave-System über den Empfang des betreffenden Bildes vom Slave-System empfangen wurde.

Durch das erfindungsgemäße Verfahren ist sichergestellt, dass jedes mobile Gerät auch bei Ausfall der Kommunikation zwischen Master-System und Slave-Systemen mit dem Aufnehmen fortfährt und eine entsprechende Bilderserie erstellt werden kann.

Aufnehmen mindestens eines Bildes kann hier sowohl das Aufnehmen eines einzelnen Bildes bedeuten als auch das Aufnehmen von mehreren Bildern unmittelbar hintereinander und insbesondere auch die Aufnahme eines Videos also von vielen Bildern pro Sekunde über einen gewissen Zeitraum hinweg. Dabei können alle im Rahmen eines Schritts e1) aufgenommen Bilder bzw. das ganze Video denselben Zeitstempel, Seriennummer und/oder Gruppierungsvariable erhalten, im Allgemeinen entsprechend dem ersten der gerade aufgenommen Bilder. Oder jedes Bild kann jeweils einen eigenen Zeitstempel, eine eigene Seriennummer und/oder Gruppierungsvariable erhalten.

Grundsätzlich kann Aufnehmen mindestens eines Bildes zusätzlich auch Tonaufnahmen oder das Aufnehmen anderer Daten umfassen.

Als einzelnes Aufnahmekriterium kann sowohl ein einzelnes Kriterium in Frage kommen als auch mehrere Kriterien und auch Gruppen von Unterbedingungen.

Ein Beispiel für ein einzelnes Ausnahmekriterium wäre z.b. dass jedes mobile Gerät alle 10 Sekunden eine Aufnahme machen soll. Ein anderes, dass jedes nach Erreichen eines bestimmten Ortes ununterbrochen Aufnahmen machen soll.

Die mehreren Aufnahmekriterien können beispielsweise sein, dass jeweils jedes mobile Gerät bei Erreichen eines ersten Ortes alle 30 Sekunden eine Aufnahme machen soll bis der Ort wieder verlassen wird und bei Erreichen eines zweiten Ortes alle 120 Sekunden eine Aufnahme machen soll bis die Distanz zum zweiten Ort einen bestimmten Wert übersteigt.

Ein Beispiel für Gruppen von Unterbedingungen wären:

### Gruppe I:

Zeit > t1 oder mobiles Gerät am Ort X1; oder
Zeit > t2 oder mobiles Gerät am Ort X2.

Dann würde bei Erreichen von X1 oder der Zeit t1 ein Bild aufgenommen und entsprechend bei Erreichen von X2 oder der Zeit t2 ein weiteres Bild.

Dabei sind im Prinzip beliebige Kombinationen von Kriterien mit "und", "undloder" oder "oder" Verknüpfungen denkbar und als Kriterien kommen grundsätzlich alle Eigenschaften in Frage, die vom mobilen Gerät aus überprüfbar sind/sein können, wie Position, Zeit, vergangene Zeit, Abstand zu anderen Geräten oder Punkten, Körpereigenschaften des Nutzers wie Puls, Empfang bestimmter Signale, bestimmte wechselseitige Kommunikation, bestimmte Aktivitäten/Nachrichten/Signale in Netzwerken wie beispielsweise dem Internet, Bestätigungs- oder Befehlssignale des Master-Systems, Luftdruck, Temperatur, Feuchtigkeit, Geschwindigkeit des Slave-Systems beispielsweise bestimmt aus seinen GPS-Koordinaten, bestimmte Befehlseingaben durch den Nutzer, etc.

Die tatsächlich nutzbaren Kriterien richten sich natürlich auch nach der technischen Ausstattung der mobilen Geräte.

Bevorzugt sind dabei für Kriterien, die von Kommunikation mit anderen Geräten abhängen, Ersatzkriterien vorgesehen. Diese werden genutzt, wenn keine Kommunikationsverbindung zwischen dem mobilen Gerät und für das eigentliche Kriterium notwendigen sonstigen Geräten besteht. Insbesondere kann vorgesehen sein, dass bei Ausfall einer Positionsermittlung durch GPS ein Zeitkriterium anstelle eines eigentlichen Ortskriteriums verwendet wird oder als Kriterium der Ort mittels verfügbarer Daten des mobilen Geräts abgeschätzt und dahingehend die Erfüllung des Ortskriteriums bestimmt wird.

Hierbei sind Zeit und Ort nicht nur als einzelner Zeitpunkt oder Ort zu verstehen, sondern können ebenfalls Zeitfenster oder Gebiete sein, beispielsweise eine bestimmte Zeit plus/minus 1 Minute oder ein Gebiet bestehend aus zwei Kreisen a 100 m um zwei separate Punkte.

Bevorzugt werden Zeitstempel als Kriterium zur Sortierung der Bilder in der Bilderserie also als Gruppierungsvariable genutzt. Grundsätzlich kommt jedoch jedes Sortierungskriterium bzw. jede Gruppierungsvariable in Frage, die am bzw. durch das Slave-System selbst ermittelbar/einstellbar ist. Denn damit ist sichergestellt, dass die vom Slave-System aufgenommenen Bilder unabhängig vom Kontakt zum Master-System entsprechend des gewünschten Sortierungskriteriums bzw. der Gruppierungsvariable später in eine sortierte Bilderserie eingereiht werden können.

Eine weitere einfache Gruppierungsvariable wäre die Seriennummer eines Bildes innerhalb der entsprechend Schritt e) durch ein Slave-System aufgenommen Bilder, also das wievielte Bild innerhalb eines solchen Bildaufnahmeprozesses ein Bild ist.

Grundsätzlich kann alles als Gruppierungsvariable dienen, was durch das Slave-System bestimmbar ist und für eine Sortierung nutzbar wäre. Dementsprechend können auch alle Eigenschaften, die wie vorher beschrieben als mögliche Aufnahmekriterien in Frage kommen, ebenfalls auch als mitzusendende Gruppierungsvariable in Frage kommen.

Dabei können Aufnahmekriterium und Gruppierungsvariable von gleicher Art sein - beispielsweise dass als Aufnahmekriterium die Unterschreitung eines Abstandes zu einer Ortskoordinate dient und als Gruppierungsvariable eben genau dieser Abstand zu der Ortskoordinate - als auch von verschiedener Art - beispielsweise dass wiederum das Aufnahmekriterium einem Ort entspricht und als Gruppierungsvariable die Geschwindigkeit dient.

Ferner kann auch mehr als eine Gruppierungsvariable verwendet werden. Die Sortierung innerhalb der Bilderserie kann dann anhand einer ausgewählten Gruppierungsvariable erfolgen oder auch anhand einer gewichteten Kombination oder auch zuerst nach der einen und bei Übereinstimmung in dieser zwischen zwei Bildern nach der anderen.

Beispielsweise indem die Sortierung nach Zeitstempel erfolgt und bei gleicher Zeit das Bild mit niedrigerer Seriennummer in der Bilderserie früher eingereiht wird.

In einer bevorzugten Variante ist eines der Aufnahmekriterien oder eine einzelne Unterbedingung davon der Eintritt oder die Positionierung eines der mobilen Geräte in einem eingestellten oder vordefinierten Bereich um eine Ortskoordinate ist.

In einer bevorzugten Variante des Verfahrens kann eines der Aufnahmekriterien oder eine einzelne Unterbedingung davon der Ablauf einer Zeitspanne oder ein Zeitpunkt oder ein Zeitfenster sein.

In einer bevorzugten Variante des Verfahrens kann eines der Aufnahmekriterien oder eine einzelne Unterbedingung davon eine relative Position eines Slave-Systems zu einem weiteren Slave-System und/oder dem Master-System sein.

In einer bevorzugten Variante des Verfahrens kann eines der Aufnahmekriterien oder eine einzelne Unterbedingung davon ein spezifisches Signal des Master-Systems oder eines der Slave-Systeme sein.

In einer bevorzugten Variante kann das Verfahren mit mobilen Geräten ausgeführt werden, deren Kameras dauerhaft oder phasenweise im aufnehmenden Zustand sind und optische Daten erfassen, wobei das Slave-System und/oder das Master-System eine diese optischen Daten analysierende Bilderkennungssoftware umfasst, wobei eines der Aufnahmekriterien oder eine einzelne Unterbedingung davon die Identifizierung eines bestimmten Musters oder einer Struktur durch die Bilderkennungssoftware ist.

Alternativ oder zusätzlich können in dieser Variante auch Muster-, Struktur und/oder Bildvergleiche mit vorgegebenen Mustern, Strukturen oder Bildern eines der Aufnahmekriterien oder ein Unterkriterium davon sein.

Solche vorgegebenen Muster, Strukturen oder Bilder können insbesondere auch vom Master-Systems bei der Einstellung der Aufnahmekriterien vorgegeben bzw. eingestellt werden. Das Master-System kann entsprechende Vorgaben zusammen mit den für die Einrichtung als Master-System benötigten Daten erhalten oder entsprechende Vorgaben können aus dem Speicher des Master-Systems oder in Datenbanken bzw. Servern bereitgestellt sein.

Identifizierung bzw. Vergleich können dabei auch graduell erfolgen, also dass bei einem bestimmten Ausmaß an Übereinstimmung das Aufnahmekriterium bzw. die Unterbedingung erfüllt ist.

Beispielsweise indem bestimmt wird, welcher Prozentsatz eines Musters identifiziert wurde und bei Überschreitung eines bestimmten Wertes wie 50 %, 75 % oder 90 % gilt das Kriterium als erfüllt.

In gleicher Weise kann auch ein Bildvergleich vorgenommen werden. Solche Vergleiche können insbesondere pixelweise erfolgen, sowohl bezogen auf das ganze Bild als auch auf Teilbereiche, wobei ein Prozentsatz der übereinstimmenden Pixel bestimmt wird und bei Über- oder Unterschreiten einer Grenze für diesen das Kriterium als erfüllt gilt.

In einer Ausprägung dieser Variante werden vor Beginn von Schritt e) bereitgestellte Bilder verwendet und/oder für spätere Aufnahmen des Schritts e) auch in entsprechend festgelegter Weise frühere Aufnahmen des Schritts e).

Insbesondere kann eines der Aufnahmekriterien oder eine Unterbedingung auch eine ausreichende Änderung oder Übereinstimmung der aktuell erfassten optischen Daten mit einem zuvor und insbesondere dem zuletzt aufgenommenen Bild sein. Dies kann ebenfalls in der Weise eines pixelweisen Vergleichs erfolgen.

In einer bevorzugten Variante des Verfahrens kann eines der Aufnahmekriterien oder eine einzelne Unterbedingung davon eine Befehlseingabe/-auslösung eines Nutzers an dem Master-System und/oder an einem der Slave-Systeme sein.

In einer bevorzugten Variante kann das Verfahren mittels eines Master-Systems oder mittels mobiler Geräte ausgeführt werden, das bzw. die mit einem Netzwerk oder anderweitig über elektronische Fernkommunikation verbunden ist/sind, bevorzugt mit dem Internet, und eines der Aufnahmekriterien oder eine einzelne Unterbedingung davon ist ein Erhalten bestimmter elektronischer Signale.

In einer bevorzugten Variante des Verfahrens können die Slave-Systeme dazu eingerichtet werden, eine manuelle Aufnahmefunktion aufzuweisen, deren Betätigung während des Bildaufnahmeprozesses das Aufnehmen eines Bildes durch die Kamera des Slave-Systems und Senden des Bildes von dem Slave-System an das Master-System zusammen mit einem Zeitstempel des Bildes bewirkt.

In einer bevorzugten Variante des Verfahrens kann das Master-System dazu eingerichtet sein, auf das Empfangen eines Bildes bei Schritt e2) mit Senden einer Empfangsbestätigung zu reagieren.

In einer bevorzugten Variante des Verfahrens kann das Slave-System dazu eingerichtet sein, bei Unterbrechung eines Kontaktes des Slave-Systems mit dem Master-System und/oder bei Fehlschlag eines Sendens nach Schritt e2) das Bild mit Zeitstempel zu speichern und es zu einem späteren Zeitpunkt, bei Wiederherstellung des Kontaktes und/oder zusammen mit der Sendung eines weiteren Bildes in einem späteren Schritt e2), erneut zu senden.

In einer bevorzugten Variante kann das Slave-System dazu eingerichtet sein, das bzw. die zu sendenden Bilder dauerhaft zu speichern.

In einer bevorzugten Variante des Verfahrens kann Schritt b) das Senden eines Einladungssignals von dem Master-System an die mobilen Geräte umfassen, wobei das Einladungssignal bevorzugt Programmdaten für die Einrichtung als Slave-System oder Verbindungsinformationen zum Erhalten solcher Programmdaten umfasst.

In einer bevorzugten Variante des Verfahrens kann das Master-System dazu eingerichtet sein, Aufnahmekriterien und Serienendkriterium bevorzugt auf manuelle Betätigung an ein noch nicht Schritt e) ausführendes und bevorzugt neu eingerichtetes Slave-System zu senden, wobei dieses Slave-System anschließend ebenfalls Schritt e) ausführt. Dies erlaubt es, weitere mobile Geräte während des Verfahrens als neue Slave-Systeme hinzuzufügen. Für diese können ggf. auch modifizierte Aufnahme- und/oder Serienendkriterien festgelegt werden.

In einer bevorzugten Variante des Verfahrens kann das Master-System gleichzeitig als Slave-System eingerichtet sein und ferner dazu eingerichtet sein, den Schritt e) für sich nicht auszuführen oder zu unterbrechen, insbesondere auf manuelle Betätigung hin.

In einer bevorzugten Variante des Verfahrens können die Slave-Systeme dazu eingerichtet sein, den Nutzer über bevorstehende Unterschritte e1) oder e2) durch Signale zu informieren, wobei bevorzugt vor Unterschritt e2) abgewartet wird bis entweder eine voreingestellte Zeit vergangen ist oder der Nutzer eine Dateneinspeisung, insbesondere eine Eingabe eines Textes, beendet hat. Die eingespeisten Daten können im Unterschritt e2) mitgesendet werden, wobei die Bilderserie bevorzugt die eingespeisten Daten umfasst.

in einer bevorzugten Variante des Verfahrens kann ein über im Allgemeinen elektronische Fernkommunikation, insbesondere das Internet, lokale Netzwerke, virtuelle Netzwerke oder soziale Netzwerke, erreichbarer Server bereitgestellt werden, der dazu eingerichtet ist, Funktionalitäten des Master-Systems auszuführen, Programmdaten für die Einrichtung als Master- und/oder Slave-System bereitzustellen und/oder die Bilderserie verschlüsselt allgemein oder nur für die mobilen Geräte bereitzustellen, die als zugehörige Slave-Systeme eingerichtet sind bzw. waren, wobei Schritt b) bevorzugt das Übermitteln eines kryptographischen Schlüssels an das Master-System und/oder die Slave-Systeme umfasst, mit Hilfe dessen auf die zugehörige Bilderserie auf dem Web-Server zugegriffen werden kann. Ein solcher Server kann insbesondere ein Web-Server sein.

Ebenfalls kann ein Zugangssystem über Accounts eingerichtet werden, so dass jeder entsprechende Nutzer Zugriff auf die Bilderserien hat, die mit seinem Account als Account des Master- oder des Slave-Systems erzeugt wurden.

In einer bevorzugten Variante des Verfahrens können für verschiedene Slave-Systeme verschiedene Aufnahmekriterien eingestellt werden.

In einer bevorzugten Variante des Verfahrens kann ferner ein Zweitaufnahmekriterium und ein Zweitserienendkriterium eingestellt wird, wobei Schritt e) ferner die Schritte umfasst, bevorzugt wiederholt:
e3) Aufnehmen eines Bildes durch die Kamera eines der Slave-Systeme wann immer das Zweitaufnahmekriterium erfüllt ist und das Zweitserienendkriterium nicht erfüllt ist;
e4) Senden des Bildes von dem Slave-System an das Master-System zusammen mit einem Zeitstempel des Bildes;
wobei bevorzugt das Zweitaufnahmekriterium das Empfangen eines Bestätigungssignals ist, dass alle Slave-Systeme Schritt e2) ausgeführt haben und/oder im Falte einer Wiederholung den Schritt e4). Dies erlaubt das Aufnehmen einer Bilderserie mit mehreren jeweils gleichzeitig aufgenommenen Bildern.

In einer bevorzugten Variante des Verfahrens kann ferner in Schritt c1) oder c2) ein Bildkriterium eingestellt werden und in Schritt d1) oder d2) an die Slave-Systeme übermittelt werden, wobei das Bildkriterium Parameter der Bildaufnahme umfasst wie beispielsweise Zoom, Pixelzahl, Schärfe oder ähnliches, wobei die Bildaufnahme in Schritt e1) entsprechend dem Bildkriterium erfolgt und/oder wobei die Bildaufnahme in Schritt e1) erfolgt, wenn das Bildkriterium erfüllt ist.

In einer bevorzugten Variante des Verfahrens können die Slave-Systeme in Primär-Slave-Systeme und Unter-Slave-Systeme unterteilt oder als diese eingerichtet werden, wobei jedem Primär-Slave-System mindestens eines der Unter-Slave-Systeme zugeordnet ist, wobei im Primär-Slave-System Aufnahmekriterien für die zugehörigen Unter-Slave-Systeme einstellbar oder nach in im Master-System eingestellten Grenzen variierbar ist.

In einer bevorzugten Variante des Verfahrens ist das Master-System oder der Server dazu eingerichtet, die Bilderserie an soziale Netzwerke zu übermitteln bzw. innerhalb dieser bereitzustellen. Ferner kann auf dem Server auch ein soziales Netzwerk eingerichtet sein oder der Server kann Teil einer Gruppe von Servern sein, auf denen ein soziales Netzwerk eingerichtet ist.

Eine bevorzugte Variante des Verfahrens ist ebenfalls die Nutzung des Verfahrens für eine Anwendung entsprechend einem der Beispiele auf Seite 2 dieser Beschreibung.

Die Erfindung betrifft ebenfalls mehrere mobile Geräte und bevorzugt einen Server jeweils entsprechend den vorher beschriebenen Verfahrensmerkmalen eingerichtet bzw. ausgelegt.

Unter Bezugnahme auf die Figuren werden nachstehend Ausführungsbeispiele der Erfindung dargestellt.
- Figur 1: zeigt ein Blockdiagramm eines erfindungsgemäßen Verfahrens zur vernetzungsunabängigen synchronisierten Generierung einer Bilderserie.
- Figur 2: zeigt schematisch die Vernetzung mehrerer mobiler Geräte und eines Web-Servers.
- Figur 3: zeigt schematisch in einer Draufsicht verschiedene Situationen mit bzw. ohne Bildaufnahme entsprechend einem erfindungsgemäßen Verfahren.

Im nachfolgenden ist für ein leichteres Verständnis teilweise von einem Aufnahmekriterium die Rede, um die Bedeutung und Anwendung von einzelnen Aufnahmekriterien zu verdeutlichen, auch wenn erfindungsgemäß mehrere Aufnahmekriterien vorgesehen sind.

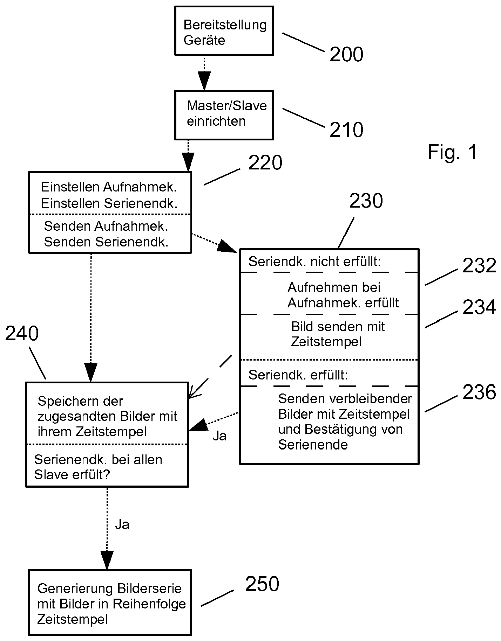

Figur 1 zeigt schematisch ein Beispiel für ein erfindungsgemäßes Verfahren. In einem ersten Schritt 200 werden die Geräte bereitgestellt. Dies bedeutet im Allgemeinen, dass vorhandene mobile Geräte mit Kameras ausgewählt werden, wie beispielsweise mehrere Smartphones, mit denen eine Bilderserie aufgenommen werden soll.

Anschließend wird im zweiten Schritt 210 die Auswahl manuell oder durch Konfiguration (beispielsweise anhand von lokalen Konfigurationsdaten, remote verfügbaren oder anhand von Daten von Accounts und/oder Nutzerprofilen) getroffen, welches der mobilen Geräte als Master-System und welche als Slave-Systeme eingerichtet werden und diese Einrichtung wird vorgenommen. Dies kann erfolgen, indem entsprechende Programmdaten aus einem Netzwerk, beispielsweise dem Internet, heruntergeladen werden und installiert werden, beispielsweise in Form von einer oder mehreren Apps, die auf Smartphones installiert werden. Oder im Schritt 210 wird durch Auswahl in bereits auf den Geräten vorhandenen Programmen/Apps eingestellt, welches Gerät Master ist und welche Slave sind.

Dabei kann das Master-System gleichzeitig auch eines der Slave-Systeme sein, wobei das Verfahren grundsätzlich vorsieht, mindestens zwei Slave-Systeme einzurichten.

In einem ersten Teil des Schritts 220, der mittels des als Master eingerichteten Geräts ausgeführt wird (links gelegenes in Figur 1 entspricht Schritten, die mittels des Master-Systems erfolgen; entsprechend erfolgt rechts gelegener Schritt 230 mittels der Slave-Systeme), werden Aufnahmekriterium und Serienendkriterium eingestellt. Diese werden anschließend im zweiten Teil von Schritt 220 an die Slave-Systeme gesendet.

Nachfolgend wird Schritt 230 ausgeführt, solange das Serienendkriterium nicht erfüllt ist.

Dabei wird in einem Unterschritt 232 von Schritt 230 immer dann ein Bild und/oder ein Video und/oder mehrere Bilder mit der Kamera des entsprechenden Slave-Systems aufgenommen, wenn das Aufnahmekriterium erfüllt ist. Alternativ kann auch der Benutzer des Slave-Systems angewiesen werden, ein Bild aufzunehmen, wenn das Kriterium erfüllt ist.

Anschließend wird das Bild bzw. die Bilder mit Zeitstempel an das Master-System gesendet (dies entfällt natürlich für ein Slave-System, welches gleichzeitig als Master fungiert), wobei weitere Aufnahmen erfolgen, solange das Serienendkriterium nicht erfüllt ist und das Aufnahmekriterium erfüllt ist.

Falls das Serienendkriterium erfüllt ist, werden in einem Unterschritt 236 alle verbleibenden Bilder mit Zeitstempel an das Master-System geschickt, was insbesondere alle Bilder einschließt deren Senden im Unterschritt 234 mangels Verbindung zwischen Slave und Master fehlschlugen. Dabei wird noch zusätzlich die Information geschickt, dass die Serie auf diesem Slave-System beendet ist, also keine weiteren Bilder zu erwarten sind.

Unterschritt 236 kann insbesondere wiederholt werden, solange Bilder verbleiben, deren Empfang vom Master-System nicht bestätigt wurde.

Während Schritt 230 mit den Slave-Systemen ausgeführt wird, wird auch Schritt 240 mit dem Master-System ausgeführt, es werden nämlich Bilder empfangen und gespeichert. Bevorzugt wird auch jeweils eine Bestätigung über den Empfang an das entsprechende Slave-System geschickt. Dies geschieht jeweils mindestens solange bis das Serienendkriterium erfüllt ist und bevorzugt bis alle Slave-Systeme ein jeweiliges Ende bestätigen.

Ergänzend kann aber auch ein zusätzliches Kriterium für die Beendigung von Schritt 240 vorgesehen und/oder einstellbar sein; beispielsweise das Überschreiten eines Zeitlimits, einer gewissen Anzahl an fertigen Serien durch Slave-Systeme oder auch eine manuell aktivierbare Funktion, die Schritt 240 beendet.

Im Schritt 250 werden dann alle generierten Bilder in Reihenfolge ihrer Zeitstempel zu einer Bilderserie zusammengestellt. Dabei können die Bilder auch mit zusätzlichen Informationen verknüpft werden, wie beispielsweise von Nutzern der Slave-Systeme während des Schritts 230 generierten Texten.

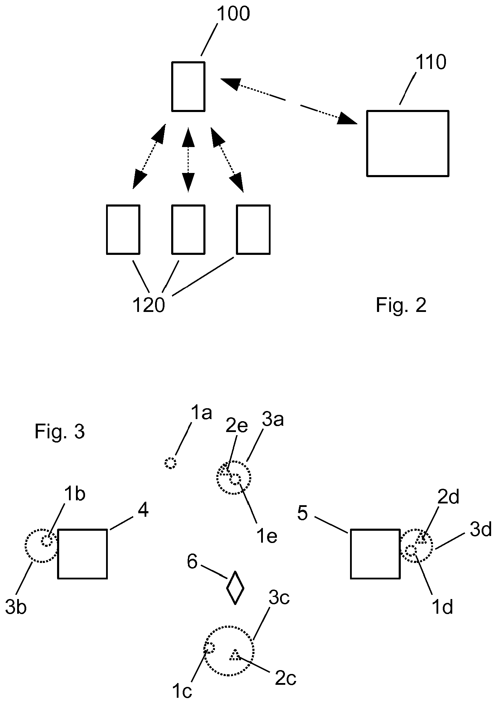

In Figur 2 sind schematisch die genutzten Geräte in einer Variation des zuvor geschilderten Verfahrens gezeigt. So werden zwar vier mobile Geräte als ein Master-System 100 und drei Slave-Systeme 120 eingerichtet. Zusätzlich existiert aber noch der Web-Server 110.

Das Verfahren unterscheidet sich dann von dem in Figur 1 gezeigten, dass zwar die Bilder an das Master-System 100 gesendet werden, dieses die Bilder aber an den Web-Server 110 weiterleitet. Die Ausführung der Schritte 240 und 250 erfolgt dann auf dem Web-Server 110.

Zusätzlich zur Generierung der Bilderserie kann dann der Web-Server 110 Zugangsdaten und/oder Verschlüsselungsdaten für das Master-System 100 und/oder die Slave-Systeme 120 bereitstellen, damit von diesen Systemen aus die generierte Bilderserie abgerufen werden kann. Hierbei können übliche Verschlüsselungstechniken wie Public-Key-Verschlüsselung zum Einsatz kommen.

Letzteres kann alternativ auch im oder vor dem Schritt 200 erfolgen, indem der Web-Server 110 beispielsweise Apps und gleichzeitig auch Zugangsdaten oder Accounts für die mobilen Geräte bereitstellt.

Figur 3 zeigt schematisch die Anwendung eines erfindungsgemäßen Verfahrens in einer bestimmten Szenerie in Draufsicht.

Dabei stellen durchgezogene Linien real existierende Objekte dar, nämlich die beiden Objekte von Interesse 4 und 5 mit quadratischer Grundfläche, was beispielsweise Gebäude 4 und 5 sein könnten, und das Objekt mit rautenförmiger Grundfläche 6, was beispielsweise ein Kunstwerk 6 sein könnte.

Große gestrichelte Kreise 3a, 3b, 3c und 3d stellen verschiedene im Rahmen des Verfahrens definierte Aufnahmebereiche dar, die für Aufnahmekriterien des Verfahrens eine Roile spielen.

Kleine gestrichelte Kreise 1a bis 1e stellen verschiedene Positionen eines ersten mobilen Gerätes bzw. Slave-Systems bzw. den Nutzer des Slave-Systems zu verschiedenen Zeitpunkten dar. Kleine gestrichelte Dreiecke 2c, 2d, und 2e stellen vom ersten Slave-System verschiedene und untereinander verschiedene Slave-Systeme bzw. Nutzer dar, die Teil desselben Verfahrens wie das erste Slave-System sind.

Zu Beginn des Verfahrens befinde sich ein mobiles Gerät an Position 1a und wird entsprechend dem Schritt 210 als Slave-System eingerichtet. An einem nicht gezeigten Master-System werden die Aufnahmekriterien und das Serienendkriterium entsprechend dem Schritt 220 definiert.

Als Aufnahmekriterien werden dabei festgelegt:
- im Bereich 3b befindlich und kein anderes Slave-System im Bereich 3b, wobei Bereich 3b als ein die Wand des Gebäudes 4 an bestimmter Stelle berührender Kreis definiert ist (erstes Aufnahmekriterium);
- im Bereich 3d befindlich und kein anderes Slave-System im Bereich 3d, wobei Bereich 3d als ein die Wand des Gebäudes 5 an bestimmter Stelle berührender Kreis definiert ist (zweites Aufnahmekriterium);
- im Bereich 3c befindlich, wobei der Bereich 3c durch Abstand von dem Kunstwerk definiert ist, und die Kamera so positioniert und ausgerichtet, dass sich in den von der Kamera erfassten Bilddaten die linke und rechte Ecke des Kunstwerks 6 gleich weit von der unteren Ecke entfernt befinden (drittes Aufnahmekriterium); und
- im Bereich 3a befindlich, wobei der Bereich 3a durch Kreis mit entsprechenden Abstand des Mittelpunkts des Kreises von dem Kunstwerk definiert ist (viertes Aufnahmekriterium).

Die Bereiche können dabei beispielsweise durch entsprechende Bildschirmeingaben auf einem eingeblendeten Satellitenphoto definiert worden sein. Aber auch jede andere Art der Eingabe ist möglich.

Als Serienendkriterium wird dabei die Positionierung im Bereich 3a und die Aufnahme eines Bildes aus diesem Bereich heraus entsprechend dem letzten Aufnahmekriterium festgelegt.

Ferner wird eingestellt, dass die Nutzer jeweils nur die Nachricht erhalten, dass ein Bild aufgenommen werden soll, und dass sie eine Bestätigung erhalten, wenn ein Bild entsprechend einem der Aufnahmekriterien aufgenommen wurde.

Aufnahme- und Serienendkriterium werden an das Slave-System 1a übermittelt. Damit beginnt ein dem Schritt 230 entsprechender Teil des Verfahrens.

Das Slave-System wird zum Gebäude 4 verbracht, wobei das Slave-System 1b bei Eintritt in den Bereich 3b eine Nachricht generiert, dass ein Bild aufgenommen werden soll, entsprechend dem vorherigen Schritt 232, denn das Slave-System ist im richtigen Bereich und kein anderes Slave-System ist anwesend. Dies entspricht dem ersten Aufnahmekriterium.

Der Nutzer betätigt das Slave-System 1b manuell entsprechend, so dass ein Bild aufgenommen wird. Das Slave-System generiert eine Bestätigung, dass ein Bild entsprechend des ersten Aufnahmekriteriums aufgenommen wurde und das Bild wird mit Zeitstempel entsprechend dem Schritt 234 an das Master-System gesendet. Das Master-System sendet eine Bestätigung an das Slave-System 1b und dieses erzeugt eine entsprechende Nachricht für den Nutzer, damit dieser weiß, dass sein Bild für die Bilderserie akzeptiert wurde.

Daraufhin wird das Slave-System zum Bereich 3c bewegt. Das Slave-System 1c erzeugt jedoch keine Aufforderung zur Aufnahme entsprechend Schritt 232, da der Teil des dritten Aufnahmekriteriums über die richtige Ausrichtung der Kamera nicht erfüllt ist. Dies fällt dem Nutzer nicht auf und er macht trotzdem eine Aufnahme.

Da kein Aufnahmekriterium erfüllt war, wird das aufgenommene Bild auch nicht an das Master-System gesendet.

Hingegen wird beim ebenfalls im Bereich befindlichen Slave-System 2c entsprechend Schritt 232 eine Nachricht generiert, ein Bild aufzunehmen, denn Slave-System 2c ist im Bereich 3c und sei auch von der Kameraausrichtung her richtig auf das Kunstwerk 6 ausgerichtet. Da An- oder Abwesenheit von anderen Slave-Systemen beim dritten Aufnahmekriterium keine Rolle spielt, hat die Anwesenheit des Slave-Systems 1c keinen Einfluss.

Anschließend wird das Slave-System 1d in den Bereich 3d verbracht. Zwar ist das Slave-System 1d richtig positioniert, aber der Teil des zweiten Aufnahmekriteriums, dass kein anderes Slave-System im Bereich 3d vorhanden sein soll, ist nicht erfüllt. Folglich erfolgt Schritt 232 in Form einer Nachricht mit Aufforderung zur Bildaufnahme nicht.

Der Nutzer nimmt trotzdem ein Bild auf. Da kein Aufnahmekriterium erfüllt ist, wird dieses ebenfalls nicht an das Master-System geschickt.

Nachfolgend wird das Slave-System 1e in den Bereich 3a bewegt. Da das vierte Aufnahmekriterium erfüllt ist, wird eine Nachricht entsprechend Schritt 232 mit Aufforderung zur Bildaufnahme erzeugt. Da die Anwesenheit eines anderen Slave-Systems beim vierten Aufnahmekriterium keine Rolle spielt, hat das Slave-System 2e hierauf keinen Einfluss. Vielmehr würde das Slave-System 2e ebenfalls eine Aufnahmeaufforderung generieren, sofern Slave-System 2e ebenfalls gerade erst in den Bereich 3a gekommen ist.

Nachdem der Nutzer manuell ein Bild aufgenommen hat, wird dieses entsprechend Schritt 234 an das Master-System gesendet. Das Master-System sendet eine Bestätigung an das Slave-System 1e und dieses erzeugt eine entsprechende Nachricht für den Nutzer.

Da nunmehr das Serienendkriterium erfüllt ist, wird Schritt 230 mit Senden einer Bestätigung des Serienendes an das Master-System beendet, da alle Bilder erfolgreich zum Master-System gesendet worden sind. Der Nutzer erhält eine entsprechende Benachrichtigung durch das Slave-System.

Das Master-System wird anschließend - sofern von den anderen Slave-Systemen auch entsprechende Bestätigungen der Beendigung der Serie eingegangen sind oder anderweitig ein Abbruch von Schritt 240 erfolgte - eine Bilderserie generieren. Diese umfasst die mithilfe des Slave-Systems 1a, 1b, 1c, 1d, 1e aufgenommenen Bilder aus den Positionen des Slave-Systems 1b und 1e entsprechend ihren Zeitstempeln mit den anderen zur Bilderserie gehörenden Bilder der anderen Siave-Systeme.

Selbstverständlich kann das Verfahren auch ausgestaltet werden, um zusätzliche Nachrichten zu generieren. Beispielweise ist bei allen erfindungsgemäßen Varianten grundsätzlich denkbar, dass Nutzer durch Nachrichten auf die teilweise Erfüllung eines Aufnahmekriteriums (beispielsweise bei Slave-System 1d, dass die Position stimmt aber noch ein anderes Slave-System anwesend ist) oder die fast vollständige Erfüllung eines Aufnahmekriteriums aufmerksam gemacht werden. Dies kann insbesondere auch in Form von Anweisungen geschehen, beispielsweise wie die Ausrichtung der Kamera zu verändern ist, beispielsweise für das Slave-System 1c.

Ferner kann auch vorgesehen sein, dass der Nutzer manuell entsprechende Informationen abrufen kann.

## Patentansprüche

1. Verfahren zur Generierung einer Sammlung von Bildern umfassend die Schritte:
a) Bereitstellen von mindestens zwei durch Nutzer mitgeführten mobilen Geräten (100, 120) mit einer Datenverarbeitungseinheit, einem Speicher und einer darin integrierten oder damit verbundenen Kamera (200), wobei die mobilen Geräte Mittel zur Bestimmung einer Ortskoordinate umfassen;
b) Bereitstellen von einem Master-System mit einer Datenverarbeitungseinheit und einem Speicher oder Einrichten von einem der mobilen Geräte (100) als Master-System und Einrichten der anderen oder aller mobilen Geräte (120) als Slave-System (210);
c1) Einstellen mehrerer Aufnahmekriterien im Master-System (220), wobei die Aufnahmekriterien Eigenschaften sind oder betreffen, die von den mobilen Geräten aus aufgrund der technischen Ausstattung der mobilen Geräte überprüfbar sind; und
c2) Einstellen eines Serienendkriteriums im Master-System (220);
d1) Übermitteln der Aufnahmekriterien an die Slave-Systeme (220);
d2) Übermitteln des Serienendkriteriums an die Slave-Systeme (220); und
e) Ausführen jeweils eines Bildaufnahmeprozesses auf jedem Slave-System, solange das Serienendkriterium nicht erfüllt ist (230), wobei das Ausführen jeweils eines Bildaufnahmeprozesses auf jedem Slave-System, solange das Serienendkriterium nicht erfüllt ist (230), die Schritte umfasst:
e1) Aufnehmen mindestens eines Bildes durch die Kamera eines der Slave-Systeme, wann immer mindestens eines der Aufnahmekriterien erfüllt ist und das Serienendkriterium nicht erfüllt ist (232);
e2) Senden des in Schritt e1) erfassten Bildes von dem Slave-System an das Master-System zusammen mit mindestens einem Zeitstempel, einer Seriennummer und/oder einer anderen Gruppierungsvariablen des Bildes (234),
wobei die Schritte e1) und e2) mehrfach ausgeführt werden, bevor das Serienendkriterium erfüllt ist, wobei das Serienendkriterium oder eine einzelne Unterbedingung davon der Eintritt oder die Positionierung des Slave-Systems, auf dem der jeweilige Bildaufnahmeprozess ausgeführt wird, in einem eingestellten oder vordefinierten Bereich um eine Ortskoordinate und die Aufnahme eines Bildes aus diesem Bereich heraus entsprechend einem der Aufnahmekriterien ist; und
das Verfahren ferner die Schritte umfasst:
f) Speichern der jeweils in Schritt e2) zugesandten Bilder mit ihrem Zeitstempel, ihrer Seriennummer bzw. ihrer Gruppierungsvariablen im Speicher des Master-Systems (240); und
g) nach Beendigung von Schritt e), Generierung einer Bilderserie umfassend die zugesandten Bilder in Reihenfolge entsprechend ihrer Zeitstempel, ihrer Seriennummer bzw. ihrer Gruppierungsvariablen (250).

2. Verfahren nach Anspruch 1, wobei eines der Aufnahmekriterien oder eine einzelne Unterbedingung davon der Eintritt oder die Positionierung eines der mobilen Geräte in einem eingestellten oder vordefinierten Bereich um eine Ortskoordinate ist.

3. Verfahren nach einem der vorhergehenden Ansprüche, wobei eines der Aufnahmekriterien oder eine einzelne Unterbedingung davon eine relative Position eines Slave-Systems zu einem weiteren Slave-System und/oder dem Master-System ist.

4. Verfahren nach einem der vorhergehenden Ansprüche, wobei die Kamera eines der Slave-Systeme dauerhaft oder phasenweise im aufnehmenden Zustand ist und optische Daten erfasst, wobei das Slave-System und/oder das Master-System eine diese optischen Daten analysierende Bilderkennungssoftware umfasst, wobei eines der Aufnahmekriterien oder eine einzelne Unterbedingung davon die Identifizierung eines bestimmten Musters oder einer Struktur und/oder der Vergleich mit anderen Mustern, Strukturen und/oder Bildern durch die Bilderkennungssoftware ist.

5. Verfahren nach einem der vorhergehenden Ansprüche, wobei eines der Aufnahmekriterien oder eine einzelne Unterbedingung davon eine Befehlseingabe/- auslösung eines Nutzers an dem Master-System und/oder an einem der Slave-Systeme ist.

6. Verfahren nach einem der vorhergehenden Ansprüche, wobei Schritt e1) auch bei Ausfall der Kommunikation zwischen Master-System und Slave-System vom Slave-System begonnen und/oder weiter ausgeführt wird.

7. Verfahren nach einem der vorhergehenden Ansprüche, wobei die Slave-Systeme dazu eingerichtet werden, eine manuelle Aufnahmefunktion aufzuweisen, deren Betätigung während des Bildaufnahmeprozesses das Aufnehmen eines Bildes durch die Kamera des Slave-Systems und Senden des Bildes von dem Slave-System an das Master-System zusammen mit einem Zeitstempel des Bildes bewirkt.

8. Verfahren nach einem der vorhergehenden Ansprüche, wobei das Master-System dazu eingerichtet ist, auf das Empfangen eines Bildes bei Schritt e2) mit Senden einer Empfangsbestätigung zu reagieren.

9. Verfahren nach einem der vorhergehenden Ansprüche, wobei das Slave-System dazu eingerichtet ist, das Bild zu speichern, dauerhaft oder falls ein Kontakt eines Slave-Systems mit dem Master-System unterbrochen ist und/oder ein Senden nach Schritt e2) fehlschlägt, wobei es zu einem späteren Zeitpunkt bei Wiederherstellung des Kontaktes und/oder zusammen mit der Sendung eines weiteren Bildes in einem späteren Schritt e2) erneut gesendet wird.

10. Verfahren nach einem der vorhergehenden Ansprüche, wobei Schritt b) das Senden eines Einladungssignals von dem Master-System an die mobilen Geräte umfasst, wobei das Einladungssignal Programmdaten für die Einrichtung als Slave-System oder Verbindungsinformationen zum Erhalten solcher Programmdaten umfasst.

11. Verfahren nach einem der vorhergehenden Ansprüche, wobei das Master-System gleichzeitig als Slave-System eingerichtet ist und ferner dazu eingerichtet ist, den Schritt e) für sich nicht auszuführen oder zu unterbrechen.

12. Verfahren nach einem der vorhergehenden Ansprüche, wobei die Slave-Systeme dazu eingerichtet sind, den Nutzer über bevorstehende Unterschritte e1) oder e2) durch Signale zu informieren.

13. Verfahren nach einem der vorhergehenden Ansprüche, wobei ein über Fernkommunikation erreichbarer Server (110) bereitgestellt wird, der dazu eingerichtet ist,
Funktionalitäten des Master-Systems auszuführen, Programmdaten für die Einrichtung als Master- und/oder Slave-System bereitzustellen und/oder die Bilderserie verschlüsselt allgemein oder nur für die mobilen Geräte bereitzustellen, die als zugehörige Slave-Systeme eingerichtet sind bzw. waren; oder
mindestens ein Nutzerprofil verknüpft mit den Bilderserien bereitzustellen, so dass ein bestimmter Nutzer auf bestimmte Bilderserien zugreifen kann.

14. Verfahren nach einem der vorhergehenden Ansprüche, wobei ferner ein Zweitaufnahmekriterium und ein Zweitserienendkriterium eingestellt wird, wobei Schritt e) ferner die Schritte umfasst:
e3) Aufnehmen eines Bildes durch die Kamera eines der Slave-Systeme wann immer das Zweitaufnahmekriterium erfüllt ist und das Zweitserienendkriterium nicht erfüllt ist;
e4) Senden des Bildes von dem Slave-System an das Master-System zusammen mit einem Zeitstempel des Bildes.

15. Gruppe von mobilen Geräten und bevorzugt einen Server eingerichtet als Master-System und Slave-Systeme zur Durchführung eines Verfahrens nach einem der vorhergehenden Ansprüche.

## Claims

1. Method for generating a collection of images comprising the steps:
a) providing at least two mobile devices (100, 120) carried along by users and with a data processing unit, a storage memory, and a camera (200) integrated therein or connected thereto, wherein the mobile devices comprise means for determining a position coordinate;
b) providing a master system with a data processing unit and a storage memory or configuring of one of the mobile devices as master system (100) and configuring of the other or of all mobile devices (120) as slave systems (210);
c1) setting several recording criteria in the master system (220), wherein the recoding criteria are or concern characteristics that are checkable from the mobile device based on the technical equipment of the mobile devices;
c2) setting a series ending criterion in the master system (220);
d1) transmitting the recording criteria to the slave systems (220);
d2) transmitting the series ending criterion to the slave systems (220); and
e) performing a process for recording an image on each slave system, respectively, as long as the series ending criterion is not fulfilled (230), wherein performing a process for recording an image on each slave system, respectively, as long as the series ending criterion is not fulfilled (230) comprises the steps:
e1) recording at least one image by the camera of one of the slave systems whenever at least one of the recording criteria is fulfilled and the series ending criterion is not fulfilled (232); and
e2) sending the image obtained in step e1) from the slave system to the master system together with a time stamp, a series number, and/or another variable for grouping the image (234);
wherein the steps e1) and e2) are performed several times before the series ending criterion is fulfilled, wherein the series ending criterion or a single subcondition thereof is the entry or the positioning of the slave system, on which the process for recording an image is performed, respectively, in a selected or a predefined area around a position coordinate and recording an image from within this area according to one of the recording criteria; and
the method further comprises the steps
f) saving each of the images send respectively in step e2) with their time stamp, their series number, and/or their variable for grouping in the storage memory of the master system (240); and
g) after finishing step e), generating a series of images comprising the images sent in order according to their time stamp, their series number and/or their variable for grouping (250).

2. Method according to claim 1, wherein one of the recording criteria or a single subcondition thereof is the entry or the positioning of one of the mobile devices in a selected or a predefined area around a position coordinate.

3. Method according to one of the preceding claims, wherein one of the recording criteria or a single subcondition thereof is a relative position of a slave system to another slave system and/or to the master system.

4. Method according to one of the preceding claims, wherein the camera of one of the slave systems is continuously or in phases in a recording condition and collects optical data, wherein the slave system and/or the master system comprises an image recognition software for analysing this optical data, wherein the recording criterion or a single subcondition thereof is the identification of a certain pattern or a certain structure by the image recognition software and/or is the comparison with other patterns, structures, and/or images by the image recognition software.

5. Method according to one of the preceding claims, wherein one of the recording criteria or a single subcondition thereof is a command, input, or trigger of the user at the master system and/or at one of the slave systems.

6. Method according to one of the preceding claims, wherein step e1) is started and/or continued to be performed by the slave system even in case of a breakdown of the communication between the master system and the slave system.

7. Method according to one of the preceding claims, wherein the slave systems are configured to have a manual recording function, whose activation during the image recording process causes the recording of an image by the camera of the slave system and the sending of said image from the slave system to the master system together with a time stamp of the image.

8. Method according to one of the preceding claims, wherein the master system is configured to react with a receipt confirmation upon receiving an image in step e2).

9. Method according to one of the preceding claims, wherein the slave system is configured to save the image, permanently or in case of interruption of a connection of the slave system with the master system and/or in case of failure of a sending according to step e2), wherein it is sent again at a later point in time in case of restoration of the contact and/or together with the sending of another image in a later step e2).

10. Method according to one of the preceding claims, wherein step b) comprises sending an invitation signal from the master system to the mobile devices, wherein the invitation signal comprises program data for the configuration as slave system or connection information for receiving such program data.

11. Method according to one of the preceding claims, wherein the master system is at the same time configured as slave system and furthermore configured to not perform step e) for itself or to interrupt step e).

12. Method according to one of the preceding claims, wherein the slave systems are configured to inform the user about imminent substeps e1) or e2) via signals.

13. Method according to one of the preceding claims, wherein a server (110) is provided reachable via distance communication, which is configured to perform the functionality of the master system, to provide program data for the configuration as master system and/or slave system, and/or to provide the series of images in an encoded way publicly or only for the mobile devices, which are or were configured as corresponding slave systems; and/or to provide a user profile linked to the series of images, so that a certain user can access the series of images.

14. Method according to one of the preceding claims, wherein additionally a second recording criterion and a second series ending criterion are set, wherein step e) comprises furthermore the steps:
e3) recording at least one image with the camera of the slave system whenever the second recording criterion is fulfilled and the second series ending criterion is not fulfilled; and
e4) sending the image from the slave system to the master system together with a time stamp of the image.

15. Group of mobile devices and preferably one server configured as master system and slave systems for carrying out a method according to one of the preceding claims.

## Revendications

1. Procédé de création d'une collection d'images comprenant les étapes :
a) Mise à disposition d'au moins deux appareils mobiles (100, 120) portés par des utilisateurs, avec une unité de traitement de données, une mémoire et une caméra intégrée ou connectée à ceux-ci (200), dans lesquels les appareils mobiles comprennent des moyens pour la détermination d'une coordonnée de localisation ;
b) Mise à disposition d'un système maître avec une unité de traitement de données et une mémoire ou configurer l'un des appareils mobiles (100) en tant que système maître et configurer l'autre ou tous les appareils mobiles (120) en tant que systèmes esclaves (210) ;
c1) Définition de plusieurs critères de capture dans le système maître (220), les critères de capture étant ou concernant des propriétés vérifiables des appareils mobiles sur la base de leurs caractéristiques techniques ; et
c2) Définition d'un critère de fin de série dans le système maître (220) ;
d1) Transmission des critères de capture aux systèmes esclaves (220) ;
d2) Transmission du critère de fin de série aux systèmes esclaves (220) ; et
e) Exécution d'un processus de capture d'image respectivement sur chaque système esclave tant que le critère de fin de série n'est pas rempli (230), dans lequel l'exécution d'un processus de capture d'image respectivement sur chaque système esclave tant que le critère de fin de série n'est pas rempli (230), comprend les étapes :
e1) Capture d'au moins une image avec la caméra de l'un des systèmes esclaves, chaque fois qu'au moins l'un des critères de capture est rempli et que le critère de fin de série n'est pas rempli (232) ;
e2) Envoi de l'image capturée à l'étape e1) du système esclave au système maître ainsi qu'avec au moins un horodatage, un numéro de série et/ou une autre variable de regroupement de l'image (234),
les étapes e1) et e2) étant exécutées plusieurs fois avant que le critère de fin de série ne soit rempli, le critère de fin de série ou l'une de ses sous-conditions individuelles étant l'entrée ou le positionnement du système esclave, sur lequel le processus de capture d'image respectif est exécuté, dans une zone établie ou prédéfinie autour d'une coordonnée de localisation et la capture d'une image à partir de cette zone conformément à l'un des critères de capture ; et le procédé comprend par ailleurs les étapes :
f) Stockage des images envoyées respectivement à l'étape e2) avec leur horodatage, leur numéro de série ou bien leur variable de regroupement dans la mémoire du système maître (240) ; et
g) Après la fin de l'étape e), création d'une série d'images comprenant les images envoyées dans l'ordre correspondant à leurs horodatages, leurs numéros de série ou bien leurs variables de regroupement (250).

2. Procédé selon la revendication 1, dans lequel l'un des critères de capture ou l'une de ses sous-conditions individuelles est l'entrée ou le positionnement de l'un des appareils mobiles dans une zone établie ou prédéfinie autour d'une coordonnée de localisation.

3. Procédé selon l'une des revendications précédentes, dans lequel l'un des critères de capture ou l'une de ses sous-conditions individuelles est une position relative d'un système esclave par rapport à un autre système esclave et/ou au système maître.

4. Procédé selon l'une des revendications précédentes, dans lequel la caméra de l'un des systèmes esclaves est en permanence ou par phase en état de capture et recueille des données optiques, le système esclave et/ou le système maître comprenant un logiciel de reconnaissance d'images analysant ces données optiques, l'un des critères de capture ou l'une de ses sous-conditions individuelles étant l'identification d'un motif ou d'une structure spécifiques et/ou la comparaison avec d'autres motifs, structures et/ou images par le logiciel de reconnaissance d'images.

5. Procédé selon l'une des revendications précédentes, dans lequel l'un des critères de capture ou l'une de ses sous-conditions individuelles est une saisie/un déclenchement d'instruction par un utilisateur sur le système maître et/ou sur l'un des systèmes esclaves.

6. Procédé selon l'une des revendications précédentes, dans lequel l'étape e1) est commencée et/ou poursuivie par le système esclave même en cas de défaillance de la communication entre le système maître et le système esclave.

7. Procédé selon l'une des revendications précédentes, dans lequel les systèmes esclaves sont configurés pour disposer d'une fonction de capture manuelle, dont l'activation pendant le processus de capture d'image provoque la capture d'une image par la caméra du système esclave et l'envoi de l'image du système esclave au système maître ainsi qu'avec un horodatage de l'image.

8. Procédé selon l'une des revendications précédentes, dans lequel le système maître est configuré pour réagir à la réception d'une image à l'étape e2) par l'envoi une confirmation de réception.

9. Procédé selon l'une des revendications précédentes, dans lequel le système esclave est configuré pour stocker l'image, de manière permanente ou en cas d'interruption de contact d'un système esclave avec le système maître et/ou d'échec d'un envoi après l'étape e2), dans lequel l'image est retransmise ultérieurement lors du rétablissement du contact et/ou avec l'émission d'une autre image à une étape e2) ultérieure.

10. Procédé selon l'une des revendications précédentes, dans lequel l'étape b) comprend l'envoi d'un signal d'invitation depuis le système maître vers les appareils mobiles, dans lequel le signal d'invitation comprend des données de programme pour la configuration en tant que système esclave ou des informations de connexion pour l'obtention de telles données de programme.

11. Procédé selon l'une des revendications précédentes, dans lequel le système maître est simultanément configuré en tant que système esclave et est par ailleurs configuré pour ne pas exécuter ou interrompre l'étape e) pour lui-même.

12. Procédé selon l'une des revendications précédentes, dans lequel les systèmes esclaves sont configurés pour informer l'utilisateur par des signaux des sous-étapes e1) ou e2) imminentes.

13. Procédé selon l'une des revendications précédentes, dans lequel un serveur (110) accessible par télécommunication est mis à disposition, lequel est configuré pour, exécuter des fonctionnalités du système maître, mettre à disposition des données de programme pour la configuration en tant que système maître et/ou esclave et/ou mettre à disposition la série d'images cryptée, de façon générale ou seulement pour les appareils mobiles qui sont configurés ou bien ayant été configurés en tant que systèmes esclaves associés ; ou mettre à disposition au moins un profil utilisateur lié aux séries d'images, de manière à permettre à un utilisateur déterminé d'accéder à des séries d'images déterminées.

14. Procédé selon l'une des revendications précédentes, dans lequel par ailleurs un second critère de capture et un second critère de fin de série sont établis, dans lequel l'étape e) comprend par ailleurs les étapes :
e3) Capture d'une image avec la caméra de l'un des systèmes esclaves chaque fois que le second critère de prise de vue est rempli et que le second critère de fin de série n'est pas rempli ;
e4) Envoi de l'image du système esclave au système maître ainsi qu'avec un horodatage de l'image.

15. Ensemble d'appareils mobiles et de préférence un serveur configuré en tant que système maître et systèmes esclaves pour la mise en oeuvre d'un procédé selon l'une des revendications précédentes.
